# EUROPEAN PATENT APPLICATION

(11) **EP 1 188 583 A1**
(43) Date of publication of application: **20.03.2002**
(21) Application number: 01121992.0
(22) Date of filing: 13.09.2001
(51) Int. Cl.: B60B 31/02

(54) **Measuring apparatus for spoked wheels**

(30) Priority: 13.09.2000 NL 1016170
(71) Applicant: HOLLAND MECHANICS B.V., 1442 PZ Purmerend (NL)
(72) Inventor: Cruijff, Marcel, 1127 PJ DEN ILP (NL); Segers, Andreas Jozef, 1451 MG Purmerland (NL)
(74) Representative: Uittenbogaart, G. A.

(57) **Abstract**

The invention relates to an apparatus for measuring a spoked wheel. The apparatus comprises measuring means for measuring the horizontal and/or vertical position of the rim (3) with respect to the hub (2) during rotation of the rim (3) around the axle. According to the invention, clamping means (1) position the hub fixedly with respect to a frame, and the measuring means comprise a measuring arm (11) which is rotatable with respect to the frame about two axes.

## Description

The invention relates to an apparatus according to the preamble of Claim 1. Such an apparatus is disclosed by EP-A-0476749 by the same applicant. This document describes a truing apparatus comprising a measuring apparatus for measuring the position of the rim with respect to the hub. The drawback of the known apparatus is that the measurement requires the hub to be movable in a horizontal and vertical direction with respect to the frame, resulting in an expensive design.

To avoid the abovementioned drawback, the apparatus is designed as characterized in Claim 1. Positioning the hub fixedly and causing a measuring arm to move with respect to the frame allows the apparatus to be constructed in a simple manner.

According to one embodiment, the device is designed in accordance with Claim 2. This enables the measuring arm to follow the irregularities of the rim in a simple manner.

According to a further improvement, the apparatus is designed in accordance with Claim 3. This allows the measuring arm to be fastened to the frame in a stable manner, thereby enabling the measurements to be carried out more accurately.

According to one embodiment, the apparatus is designed in accordance with Claim 4. This allows the measuring arm to be retained at a fixed location while a wheel to be measured is put in position and removed, thus reducing the stress on the sensors.

According to one improvement, the apparatus is designed in accordance with Claim 5. This enables the rim movement to be measured in a simple manner.

According to one embodiment, the apparatus is designed in accordance with Claim 6. This allows the measurements for each spoke to be recorded.

According to one embodiment, the apparatus is designed in accordance with Claim 7. This allows an overview of the quality of the measured wheel to be obtained rapidly and permits a quality improvement strategy to be defined.

According to one embodiment, the apparatus is designed in accordance with Claim 8. This allows the quality of a measured wheel to be improved rapidly and simply.

According to one embodiment, the apparatus is designed in accordance with Claim 9. This allows quality data of wheels produced to be collected in a simple manner and to be used to formulate improvements.

According to one embodiment, the apparatus is designed in accordance with Claim 10. This allows the spokes to be located, for example, with respect to the reference such as a valve hole. This makes it possible to compare measured values with previously measured values.

The design is explained below with reference to a specific embodiment with the aid of a drawing in which
- Figure 1: shows a perspective view of a measuring apparatus,
- Figure 2: shows a perspective view of a measuring arm, and
- Figure 3: shows a layout of a control monitor.

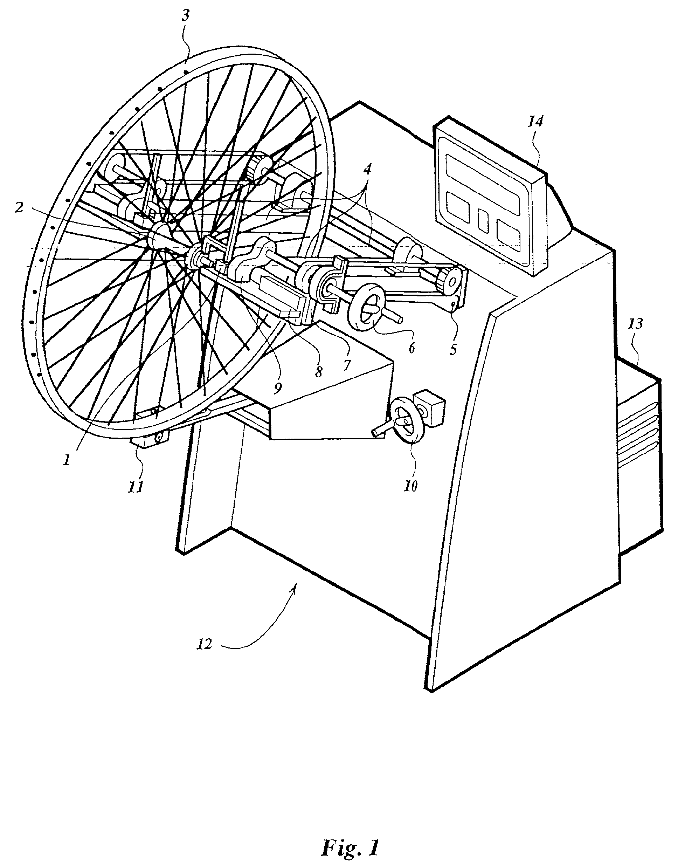

Figure 1 shows a measuring apparatus 12 in which a spoked wheel can be measured and, if required, can be trued. The wheel inter alia consists of a hub 2 and a rim 3 which are attached to one another by means of spokes.

The hub 2 has an axle which is clamped in the measuring apparatus 12 by means of two clamps 1. The clamps 1 are each secured to a clamp support 8 which is secured to a swivel arm 4 by means of a straight guideway 7. The clamp supports 8 can be moved towards and away from one another synchronously by a width adjustment means 6, each clamp support 8 carrying a nut 9 by means of which, via rotation of the shaft of the width adjustment 6, the clamp supports 8 are moved in the straight guideways 7 towards -and away from one another.

The rotations of the shafts of the width adjustment means 6 are coupled to one another by means of toothed belts, so that the centre of the gap between the clamps 1 always remains in the same position when said gap is adjusted. Via the width adjustment means 6, the gap between the clamps 1 can be adapted to the length of the axle of the hub 2.

In order to adapt the measuring apparatus 12 to the diameter of the rim 3, the swivel arm 4 can swivel about rotational axis 5 with the aid of a height adjustment means 10. As a result, the centre line of the hub 2 is moved up or down, thus enabling the rim 3 to be moved within operating range of a measuring arm 11. In addition, the measuring apparatus 12 is provided with a control system 13 and a monitor 14 to operate the measuring apparatus 12.

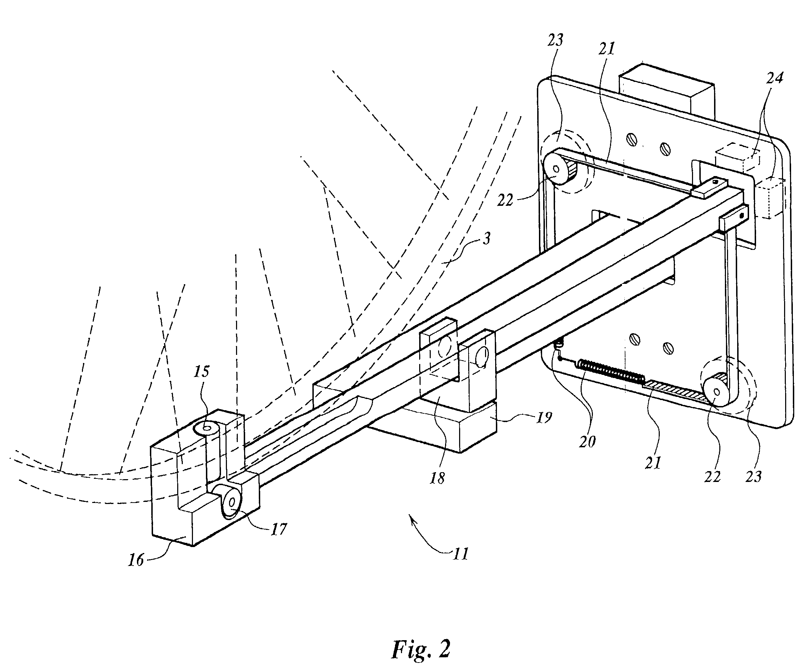

Figure 2 shows the measuring arm 11 in more detail. A stationary arm support 19 is attached to the frame of the measuring apparatus 12. Disposed on the stationary arm support 19 is a pivot bracket 18 which can rotate about a vertical axis. Within the pivot bracket 18, the measuring arm 11 can rotate about a horizontal axis. This allows a cleat 16 secured to one end of the measuring arm 11 at the point of the rim 3 to move freely in a horizontal direction and in a vertical direction.

Attached to the other end of the measuring arm 11 is a toothed belt 21 which extends in a horizontal direction and via a pulley 22 is pulled taut by a spring 20. Also attached thereto is a toothed belt 21 which extends in the vertical direction and via a second pulley 22 is pulled taut by a second spring 20. The pulleys 22 are each coupled to encoders which are able to determine the rotational position of the pulleys and thus the position of the end of the measuring arm 11 in the horizontal direction and vertical direction.

The cleat 16 is provided with a guide roller having a vertical axis 15 and a guide roller having a horizontal axis 17. The springs 20 press these guide rollers against the rim 3, thus allowing the measuring arm 11 to follow the movements of the rim 3. The frame of the measuring apparatus 12 is provided, near the end of the measuring arm 11, with magnets 24 which are able to keep the measuring arm 11 against the forces of the springs 20 in a stationary position while a wheel is being secured or removed. Before starting the measurement, the operator releases the measuring arm 11 from the magnets 24 and presses the guide rollers 15 and 17 against the rim 3. As the rim 3 rotates about the hub axle, the measuring arm 11 will follow the horizontal and vertical position of the rim 3, as a result of the guide rollers being pressed against the rim by the springs 20. As a result of the measuring arm 11 following the rim 3, the encoders 23 will likewise follow this movement, and the result of this measurement can be shown in real time on the monitor 14. Instead of the abovementioned magnets 24, the measuring arm 11 can, if required, be locked in some other way, for example by means of a snap-fit connection.

Also disposed on the cleat 16 is a sensor (not shown) which detects the proximity of a spoke. Each time a spoke passes through, the position of the encoders 23 is read and stored in a memory. The number of spokes in the wheel is known to the control system, thus allowing, after a complete revolution, a measuring round, the horizontal and/or vertical positions of the rim 3 with respect to the hub 2, which correspond to each spoke, to be recorded. After completion of a full measurement round, in which the positions of all the spokes have been recorded, -the measurement switches back to real-time measurement.

Instead of, or in addition to, the sensor by means of which the position of a spoke is detected, one of the guide rollers 15 or 17 can be provided with an encoder. It is then possible, in the control system, to continuously measure and record the trend of the horizontal and/or vertical position of the rim 3 with respect to the hub 2.

It is also possible for the cleat 16 to be fitted with a sensor which is used to detect the position of the valve hole. This then allows the spokes to be numbered from the valve hole, thus allowing the data to be checked afterwards. Another simple way of recording, for all the spokes, the associated horizontal and vertical position of the rim 3 with respect to the hub 2 as a sequential number from the valve hole is to start the observation with the valve hole in a predetermined position, for example at the point of the guide rollers 15 and 17.

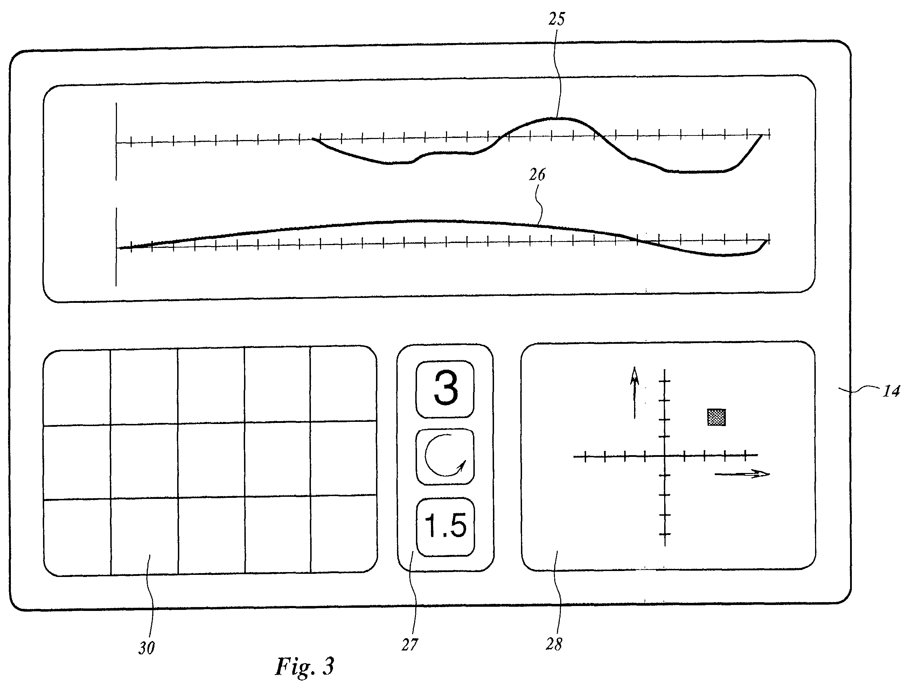

Figure 3 schematically shows the layout of the monitor 14. At the top of the monitor, the results of a measurement of a measurement round are shown, line 25 indicating the trend of the vertical position of the rim 3 with respect to the hub 2 at all spokes, and line 26 indicating the trend of the horizontal position.

These lines can be of service in defining the truing strategy. The picture 28 indicates the local deviation as measured at that instant, as well as the number of the nearest spoke. This spoke number is shown at 27. The picture 27 and 28 shows the situation as measured by the measuring arm 11 at a particular instant, and the operator is able, on the basis of the location of the local deviation 28 with respect to the coordinate system, to assess whether the deviation is within tolerance.

Because the design of the measuring apparatus 12 is such that for each wheel the centre of the hub is always in the same position with respect to the measuring apparatus, it is also possible to measure to what extent the rim 3 is eccentric from the centre.

Input keys for the monitor shown are densted by 30. This is applicable in the situation shown, where the monitor 14 is provided with a touch screen. An alternative option, instead of a touch screen, is to use a keyboard and/or mouse.

The control system holds data of various wheels, together with the corresponding spoke numbers, eccentricity of the rim and tolerances. If a wheel is to be measured, the code of the wheel in question is input with the aid of the input keys 30, and the measurement can commence. The gap between the clamps 1 is appropriately set for the wheel with the aid of the width adjustment means 6, and the height adjustment means 10 is used to set the correct distance from the hub 2 to the measuring arm 11. The valve hole is positioned near the guide roller 17, and one of the input keys 30 is pressed to indicate the start of the measurement. In another embodiment, the measurement is started by the spoke sensor (not shown) being moved into position. Then the wheel is rotated for at least one whole turn, after which the result of the measurement is displayed on the monitor 14.

On the basis of the trend of the vertical deviation 25 and/or the trend of the horizontal deviation 26, the operator decides what spoke or spokes to tighten or loosen. Said tightening or loosening is performed by the operator by turning a spoke nipple, screwed to the spoke in question, by means of a spoke key. In so doing, he uses a hand-held spoke key or a mechanically driven spoke key which, on the inside of the rim 13, engages nipples mounted around the spokes.

After the operator has tightened or loosened one or more spokes, he will perform a new measurement to see whether there has been an improvement and to decide what action to carry out next.

Optionally, the measurement apparatus 12 is provided with an analysis program which generates advice for tightening or loosening specific spokes. In Figure 3, the truing advice is indicated at 27, specifying the spoke number, the direction of rotation of the nipple and the number of rotations of the nipple. After the operator has carried out the first correction, he notifies the control system, whereupon the next advice is displayed.

Of course it is also possible for a mechanically driven spoke key to be directly linked to the results of the analysis program. The operator manually positions the key on the nipple of the indicated spoke, and the mechanically driven spoke key then performs the required correction. Alternatively, embodiments of the apparatus are possible in which the rim is driven and the desired spoke is brought to the mechanically driven spoke key, after which the desired correction is applied automatically.

In a further improvement of the apparatus, this is designed to comprise an apparatus for measuring the tensions in the spoke, for example by measuring the characteristic frequency of the spokes after they have been struck. The measured tensions are then processed in the analysis program to draw up the truing instructions.

## Claims

1. Apparatus for measuring properties of a wheel which is composed of a hub (2) rotatable about an axle, a rim (3) and spokes (4), comprising a frame, clamping means (1) for clamping the axle and measuring means having sensors for measuring the horizontal and/or vertical position of the rim with respect to the hub during rotation of the rim around the axle, **characterized in that** the clamping means (1) position the hub fixedly with respect to the frame, and the measuring means comprise a measuring arm (11) which is rotatable with respect to the frame about two axes (18).

2. Apparatus according to Claim 1, **characterized in that** the measuring arm (11) at its end near the rim is provided with one or more rollers (15, 17) which can be pressed against the rim (3) and at its end near the frame is coupled to resilient means (20) which are fastened to the frame and are designed to press the rollers against the rim.

3. Apparatus according to Claim 2, **characterized in that** the measuring arm (11) is rotatably fastened to the frame by means of bearing means (18) which are positioned on a support (19) and are positioned between the rollers (15, 17), which can be pressed against the rim, and the resilient means.

4. Apparatus according to Claim 1, 2 or 3, **characterized in that** clamping means (24) are provided for clamping the measuring arm (11) against the frame.

5. Apparatus according to any one of the preceding claims, **characterized in that** the measuring arm (11) is provided with a roller (15, 17) which can be pressed against the rim (3) and is coupled to a sensor for detecting the rotation of the rim.

6. Apparatus according to any one of the preceding claims, **characterized in that** the measuring arm (11) is provided with a sensor for detecting the vicinity and/or the passing of a spoke.

7. Apparatus according to any one of the preceding claims, **characterized in that** means (14, 25-28) are present for indicating, during the measurement, the horizontal and/or vertical position, measured at a spoke and/or at all spokes, of the rim with respect to the hub.

8. Apparatus according to any one of the preceding claims, **characterized in that** a mechanically driven hand tool is present for tightening or loosening the spokes on the basis of the indicated measurement data.

9. Apparatus according to any one of the preceding claims, **characterized in that** means are present for storing and/or distributing measured data.

10. Apparatus according to any one of the preceding claims, **characterized in that** means are present for establishing a reference, during the measurement, for the rotational position of the rim.
